# EUROPÄISCHE PATENTANMELDUNG

(11) **EP 3 791 997 A1**
(43) Veröffentlichungstag der Anmeldung: **17.03.2021**
(21) Anmeldenummer: 19196309.9
(22) Anmeldetag: 10.09.2019
(51) Int. Cl.: B23Q 17/00, B23B 31/02, B23F 23/06

(54) **ADAPTER ZUR VERWENDUNG ALS TEIL EINER SPANNVORRICHTUNG, SPANNVORRICHTUNG MIT EINEM SOLCHEN ADAPTER UND VERFAHREN ZUM BEREITSTELLEN EINES SOLCHEN ADAPTERS**

(71) Anmelder: Klingelnberg AG, 8050 Zürich (CH)
(72) Erfinder: Boelter, Martin, 42857 Remscheid (DE)
(74) Vertreter: Heusch, Christian

(57) **Zusammenfassung**

Adapter (23) umfassend
- eine zentrale Aufnahmeöffnung (24), die dazu ausgelegt ist eine Welle oder einen Schaft des Zahnradwerkstücks aufzunehmen,
- eine ringförmige Plananlagefläche (26), die
• konzentrisch zu derzentralen Aufnahmeöffnung (24) angeordnet ist,
• sich in einem werkstückseitigen Endbereich des Adapters (23) befindet, wobei der Adapter (23) einen Grundkörper umfasst, der

- eine sich verjüngende Grundform aufweist,
- einstückig ist,
- einen Schichtaufbau,
- mehrere gekrümmt verlaufende Nuten (31) aufweist, wobei die Nuten (31) dazu eingerichtet sind während einer Bearbeitung des Zahnradwerkstücks in einer Bearbeitungsmaschine kollisionsfrei von einem Bearbeitungswerkzeug durchlaufen zu werden, und
- mindestens einen druckdicht durch den Grundkörper verlaufenden Druckkanal umfasst, der sich durch den Schichtaufbau von dem werkstückabgewandten Endbereich bis zu dem werkstückseitigen Endbereich windet und der in der Plananlagefläche (26) mündet.

## Beschreibung

Die Erfindung betrifft einen Adapter zur Verwendung im Zusammenhang mit einer Spannvorrichtung beim Spannen eines Zahnradwerkstücks. Insbesondere geht es um die Verwendung eines Adapters beim Spannen eines Zahnradwerkstücks in einer Bearbeitungsmaschinen zum spanenden Bearbeiten von Zahnradwerkstücken.

### Stand der Technik

Bei der spanenden Bearbeitung von Zahnrädern ist es wichtig das Zahnradwerkstück fest und präzise einspannen zu können. Ansonsten kann es bei der Bearbeitung z.B. zu einer Schwingungsanregung kommen, die auf den Oberflächen der Zahnflanken Welligkeiten verursachen kann.

Es besteht der Bedarf die Spannvorrichtung, die in einer Bearbeitungsmaschine zum Spannen des Zahnradwerkstücks eingesetzt wird, optimal und werkstückspezifisch auszugestalten, um das feste und präzise Aufspannen zu ermöglichen. Es gibt aber bisher keine universell einsetzbare Spannvorrichtung, die für die verschiedensten zu bearbeitenden Zahnradwerkstücke geeignet wäre.

Neben dem Aspekt des festen und präzisen Aufspannens, spielt ein weiterer Aspekt eine wichtige Rolle. Zum Teil sind die Relativbewegungen des Werkzeugs in Bezug zum Zahnradwerkstück bei der spanenden Bearbeitung hochkomplex. Die Schneidkanten der Schneidmesser eines Stabmesserkopfs z.B., die im 3-dimensionalen Raum einer komplizierten Flugbahn folgen, laufen Gefahr mit der Spannvorrichtung der Bearbeitungsmaschine zu kollidieren. Daher kommt typischerweise ein Nasenstück zum Einsatz, das zwischen der Spannvorrichtung und dem Zahnradwerkstück sitzt. Ein solches Nasenstück hat eine sich verjüngende Grundform, um Kollisionen mit dem Werkzeug zu vermeiden, und es schafft einen geeigneten Übergang zwischen der Spannvorrichtung und dem Zahnradwerkstück. Außerdem werden teilweise Aussparungen für die Werkzeugbahnen am Nasenstück vorgesehen.

Neben der reinen Funktion als Zwischenstück oder Adapter, werden teilweise zusätzliche Funktionen in das Nasenstück integriert. So verlangen einige Anwender z.B. die Integration einer Kontrollfunktion, die es ermöglicht während des Bearbeitens zu prüfen, ob das Zahnradwerkstück plan am Nasenstück anliegt (auch Plananlagekontrolle genannt).

Anhand dieser zusammenfassenden Einleitung ist zu erkennen, dass der Aufwand groß ist, wenn man für verschiedene zu bearbeitende Zahnradwerkstücke jeweils ein geeignetes Nasenstück anfertigen und vorhalten muß.

Von daher liegt der Erfindung die Aufgabe zugrunde, eine Lösung anzubieten, die es erlaubt für jedes Zahnradwerkstück, oder für eine Serie von ähnlichen Zahnradwerkstücken, jeweils das optimal ausgelegte Nasenstück als Adapter bereit zu stellen.

Die Aufgabe wird erfindungsgemäß durch eine Vorrichtung gemäss Patentanspruch 1 gelöst.

Erfindungsgemäss ist diese Aufgabe durch einen Adapter gelöst, der speziell zur Verwendung als Teil einer Spannvorrichtung einer Bearbeitungsmaschine ausgelegt ist, wobei der Adapter beim Einspannen eines Zahnradwerkstücks in der Spannvorrichtung mechanisch (direkt) mit dem Zahnradwerkstück in Kontakt steht. Der Adapter umfasst
- eine zentrale Aufnahmeöffnung, die konzentrisch zu einer Werkstück-Spindelachse der Bearbeitungsmaschine angeordnet ist, und die dazu ausgelegt ist eine Welle oder einen Schaft des Zahnradwerkstücks aufzunehmen,
- eine ringförmige Plananlagefläche, die
   - konzentrisch zu der zentralen Aufnahmeöffnung angeordnet ist,
   - sich in einem werkstückseitigen Endbereich des Adapters befindet, und
   - die im Wesentlichen senkrecht zur Werkstück-Spindelachse verläuft,
   wobei der Adapter einen Grundkörper umfasst, der
- eine sich verjüngende Grundform aufweist, wobei der Grundkörper im werkstückseitigen Endbereich einen geringeren Umfang als in einem werkstückabgewandten Endbereich hat,
- einstückig ist,
- einen Schichtaufbau,
- mehrere gekrümmt verlaufende Nuten aufweist, wobei die Nuten dazu eingerichtet sind während einer Bearbeitung des Zahnradwerkstücks in der Bearbeitungsmaschine kollisionsfrei von einem Bearbeitungswerkzeug durchlaufen zu werden, und
- mindestens einen druckdicht durch den Grundkörper verlaufenden Druckkanal umfasst, der sich durch den Schichtaufbau von dem werkstückabgewandten Endbereich bis zu dem werkstückseitigen Endbereich windet und der in der Plananlagefläche mündet.

Der Adapter zeichnet sich bei mindestens einem Teil der Ausführungsformen dadurch aus, dass der Druckkanal sich so durch den Schichtaufbau windet, dass er mindestens eine Richtungsänderung aufweist.

Der Adapter zeichnet sich bei mindestens einem Teil der Ausführungsformen dadurch aus, dass der Druckkanal sich 3-dimensional durch den Schichtaufbau windet.

Der Adapter zeichnet sich bei mindestens einem Teil der Ausführungsformen dadurch aus, dass der Schichtaufbau in einem additiven Verfahren durch selektives Laserschmelzen eines Metallwerkstoffs hergestellt wurde.

Der Adapter zeichnet sich bei mindestens einem Teil der Ausführungsformen dadurch aus, dass der Schichtaufbau in einem form- und werkzeuglosen 3D-Fertigungsprozess unter Einsatz eines Metallwerkstoffs hergestellt wurde.

Der Adapter zeichnet sich bei mindestens einem Teil der Ausführungsformen dadurch aus, dass der Schichtaufbau mit einem 3D-Laserschmelzverfahren unter Einsatz eines Metallwerkstoffs so hergestellt wurde, dass sich ein stoffschlüssiger Zusammenhalt zwischen und innerhalb einzelner Schichten des Schichtaufbaus ergibt.

Der Adapter zeichnet sich bei mindestens einem Teil der Ausführungsformen dadurch aus, dass der Schichtaufbau nach dem Laserschmelzen nitridiert wurde und eine äußere Nitridschicht umfasst, deren Dicke vorzugsweise weniger als 100 µm beträgt.

Der Adapter zeichnet sich bei mindestens einem Teil der Ausführungsformen dadurch aus, dass er mindestens teilweise durch Schleifen, oder ein anderes Feinbearbeitungsverfahren, nachbearbeitet wurde. Die nachbearbeiteten Flächen (z.B. Passflächen) haben eine Oberflächenrauheit von weniger als 50 µm.

Der Adapter zeichnet sich bei mindestens einem Teil der Ausführungsformen dadurch aus, dass seine Bauteilgeometrie vor dem Herstellen rechnerisch funktionsoptimiert und/oder statisch- und/oder dynamischmechanisch optimiert und/oder geometrieoptimiert wurde. Außerdem wird der Adapter einstückig hergestellt. D.h., der Adapter wird in Integralbauweise so hergestellt, dass alle wesentlichen Funktionen und mechanischen Eigenschaften in den Adapter integriert sind.

Die Erfindung lässt sich vor allem auf Spannvorrichtungen anwenden, die einen Grundkörper mit einer Aufnahmeöffnung zur Aufnahme der Welle oder des Schaftes eines Zahnradwerkstücks umfassen und wo der Adapter zwischen der Spannvorrichtung und dem Zahnradwerkstück angeordnet ist in mechanisch direkt mit einer Ferse oder einem Axialanlagenabsatz des Zahnradwerkstück in Kontakt steht.

Bei allen Ausführungsformen kann der Adapter in einem werkstückseitigen Endbereich seines Grundkörpers eine kegelförmige, äussere Mantelfläche aufweisen, wobei sich die Nut/Nuten einen gekrümmten Verlauf haben und sich entlang dieser Mantelfläche erstreckt/erstrecken.

Vorzugsweise umfassen alle Ausführungsformen eine Plananlagenkontrolle, die zum Kontrollieren der Plananlage des Zahnradwerkstücks an dem Adapter der Spannvorrichtung während der spanenden Bearbeitung dient.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben.
- **FIG. 1**: zeigt eine schematische Vorderansicht einer Bearbeitungsmaschine des Standes der Technik, in der der erfindungsgemäße Adapter als Teil einer Spannvorrichtung eingesetzt werden kann;
- **FIG. 2A**: zeigt eine perspektivische Explosionsansicht einer beispielhaften Spannvorrichtung des Standes der Technik, die zum Spannen eines Zahnradwerkstücks in Form eines Kegelradritzels mit Welle ausgelegt ist;
- **FIG. 2B**: zeigt eine Schnittansicht der Spannvorrichtung nach Fig. 2A im einsatzbereiten Zustand;
- **FIG. 3**: zeigt eine perspektivische Ansicht eines beispielhaften Grundkörpers eines Adapters der Erfindung, wobei an dem Grundkörper beispielhaft und schematisch eine gekrümmte Nut vorgesehen ist;
- **FIG. 4**: zeigt eine Seitenansicht eines weiteren Adapters der Erfindung, der zusammen mit einem Zahnradwerkstück in einer Spannvorrichtung eingespannt ist;
- **FIG. 5**: zeigt eine schematische Schnittansicht eines weiteren Adapters der Erfindung;
- **FIG. 6A**: zeigt eine perspektivische Ansicht eines weiteren Adapters der Erfindung von der werkstückabgewandten Seite;
- **FIG. 6B**: zeigt eine perspektivische Ansicht des Adapters der Fig. 6A von der Werkstückseite.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen sollen. Der erfinderische Gedanke und der Schutzumfang der Ansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

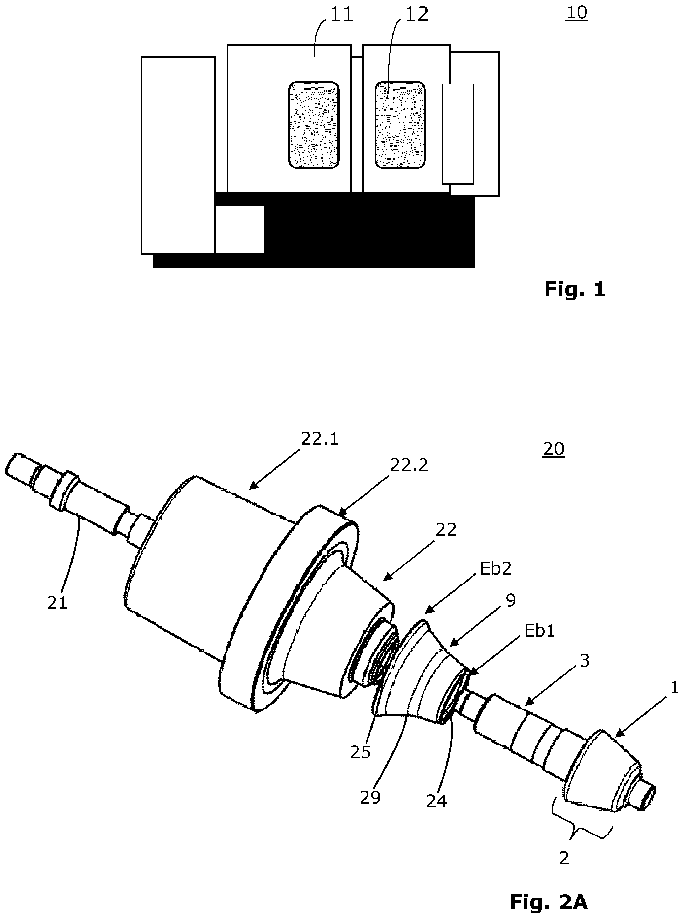

In Fig. 1 ist eine schematisierte Ansicht einer beispielhaften (Zahnrad-)Bearbeitungsmaschine 10 gezeigt. Bei der Bearbeitungsmaschine 10 handelt es sich um eine Verzahnungsmaschine, die zum Bearbeiten der Verzahnung von Zahnradwerkstücken ausgelegt ist. Der Bearbeitungsraum in dem Zahnradwerkstücke bearbeitet werden kann sich hinter einer Verkleidung 11 mit Sichtfenster 12 befinden.

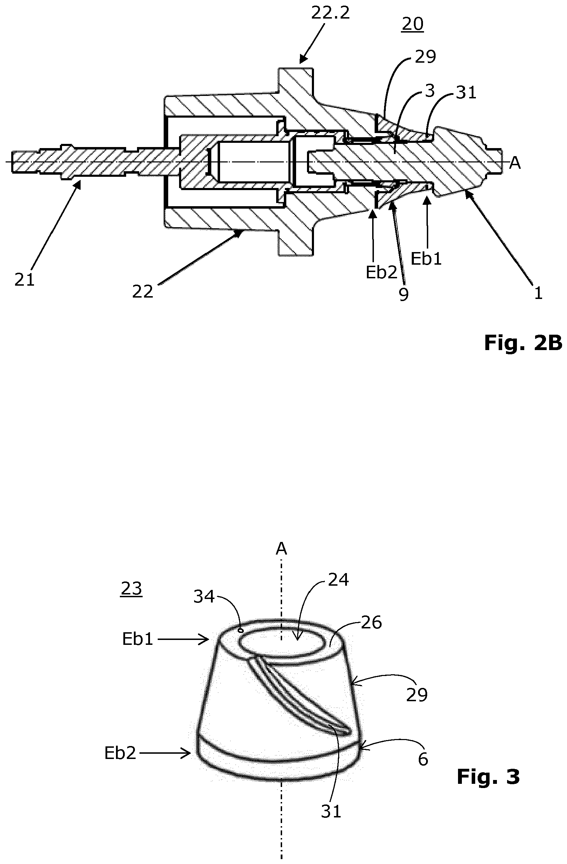

Die Bearbeitungsmaschine 10 ist speziell zum spanenden Bearbeiten der Zahnflanken von Zahnradwerkstücken 1 mit einem Verzahnwerkzeug ausgelegt und weist eine Spannvorrichtung 20 zum Aufspannen eines zu bearbeitenden Zahnradwerkstücks 1 auf. Eine beispielhafte Spannvorrichtung 20 des Standes der Technik ist in Fig. 2A in perspektivischer Form gezeigt, wobei hier nur die wesentlichen Elemente mit Bezugszeichen versehen sind.

Wie der Explosionsdarstellung der Fig. 2A zu entnehmen ist, kann ein Zahnradwerkstück 1 einen kegelförmigen Kopfbereich 2 und eine Welle oder einen Schaft 3 umfassen. Im Kopfbereich 2 befinden sich die Zahnflanken (nicht gezeigt), die zu bearbeiten sind, oder es werden im Kopfbereich 2 die Zahnflanken aus dem Material des Zahnradwerkstücks 1 herausgearbeitet.

Die Spannvorrichtung 20 umfasst hier einen Grundkörper 22 und ein Nasenstück 9 des Standes der Technik, um das Zahnradwerkstück 1 (hier ein Kegelradritzel mit Ritzelschaft 3) optimal aufspannen zu können. Das ringförmige Nasenstück 9 ist mit dem Grundkörper 22 verbunden und der Ritzelschaft 3 wird in die Zentralbohrung 24 des Nasenstücks 9 und die Zentralbohrung 25 des Grundkörpers 22 geschoben. Dann wird der Ritzelschaft 3 dort festgespannt. Das Festspannen kann z.B. durch das axiale Bewegen einer Spannstange 21 erfolgen.

Das Nasenstück 9 dient einerseits als Zentrierbüchse und andererseits als Adapter, wie eingangs beschrieben. Durch die Wahl des geeigneten Nasenstücks 9 ist eine Form- und/oder Grössenanpassung möglich.

Die Spannvorrichtung 20 kann zum Beispiel mit einem Aussenkonus 22.1 in einer konischen Aufnahmeöffnung der Werkstückspindel (nicht gezeigt) der Bearbeitungsmaschine 10 eingesetzt und dort mittels Schrauben befestigt werden. Die entsprechenden Schraubenlöcher können z.B. an dem umlaufenden Flansch 22.2 des Grundkörpers 22 vorgesehen sein.

Anhand der nachfolgenden Figuren werden nun verschiedene Ausführungsformen eines Adapters 23 sowie dessen wesentlichen Merkmale beschrieben.

Die Spindelachse der Werkstückspindel trägt das Bezugszeichen A. Da alle wesentlichen Elemente des Adapters 23 im montierten/gespannten Zustand koaxial zu dieser Spindelachse A verlaufen, wird im Folgenden stets auf diese Achse A Bezug genommen. Außerdem werden am Adapter 23 ein werkstückseitiger Bereich Eb1 und ein werkstückabgewandter Bereich Eb2 definiert. Bei dem werkstückseitigen Bereich Eb1 handelt es sich um den Bereich des Adapters 23, der nahe am oder direkt am Zahnradwerkstück 1 liegt. Bei dem werkstückabgewandten Bereich Eb2 handelt es sich um den Bereich des Adapters 23, der nahe an oder direkt an der Spannvorrichtung 20 liegt.

Fig. 3 zeigt eine stark schematisierte Perspektivansicht einer ersten Ausführungsform des Adapters 23 der Erfindung. Der Adapter 23 ist bei allen Ausführungsformen dazu auslegt im montierten Zustand koaxial zur Werkstück-Spindelachse A angeordnet zu werden.

Der Adapter 23 umfasst bei allen Ausführungsformen einen Grundkörper, der eine sich verjüngende Grundform aufweist, wobei der Grundkörper im werkstückseitigen Endbereich Eb1 einen geringeren Umfang als in einem werkstückabgewandten Endbereich Eb2 hat.

Der Grundkörper des Adapters 23 wird von einer Mantelfläche 29 umgeben.

Außerdem ist der Grundkörper einstückig hergestellt und er weist einen herstellungsbedingten Schichtaufbau auf, wie später erläutert werden wird.

Weiterhin umfasst der Grundkörper mehrere gekrümmt verlaufende Nuten 31, 32 im Bereich der Mantelfläche 29. In Fig. 3 ist lediglich eine Nut 31 beispielhaft gezeigt. Die Nuten 31, 32 sind dazu eingerichtet, um während der Bearbeitung des Zahnradwerkstücks 1 mit einem Bearbeitungswerkzeug in der Bearbeitungsmaschine 10 kollisionsfrei von dem Bearbeitungswerkzeug durchlaufen zu werden.

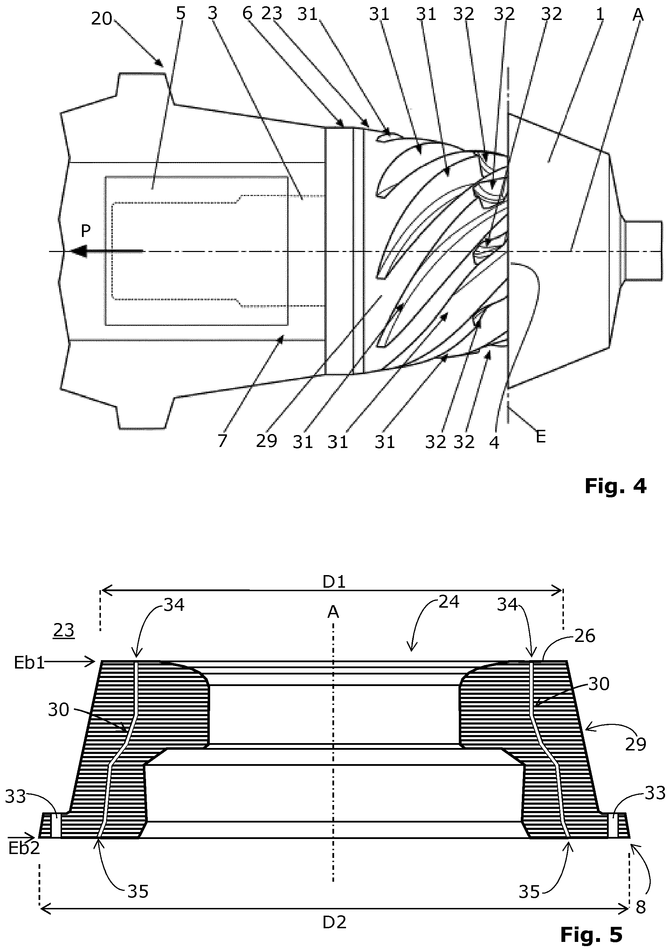

Außerdem ist mindestens ein druckdicht durch den Grundkörper verlaufender Druckkanal 30 vorgesehen (siehe Fig. 5), der sich durch den Schichtaufbau von dem werkstückabgewandten Endbereich Eb2 bis zu dem werkstückseitigen Endbereich Eb1 windet und der in der Plananlagefläche 26 mündet. In Fig. 3 ist in der Plananlagefläche 26 ein kleines Austrittsloch 34 des Druckkanals 30 gezeigt.

Bei der Plananlagefläche 26 handelt es sich bei allen Ausführungsformen um eine ringförmige Plananlagefläche 26, die konzentrisch zu der zentralen Aufnahmeöffnung 24 angeordnet ist, die sich in dem werkstückseitigen Endbereich Eb1 des Adapters 23 befindet, und die im Wesentlichen senkrecht zur Werkstück-Spindelachse A verläuft. D.h., der Adapter 23 hat einen ringförmigen Anschlussflansch 26 mit einer planen ringförmigen Fläche (axiale Flanschfläche, ringförmige Auflagefläche oder Plananlagefläche genannt), wie in der stark schematisierten Darstellung der Fig. 3 zu erkennen ist.

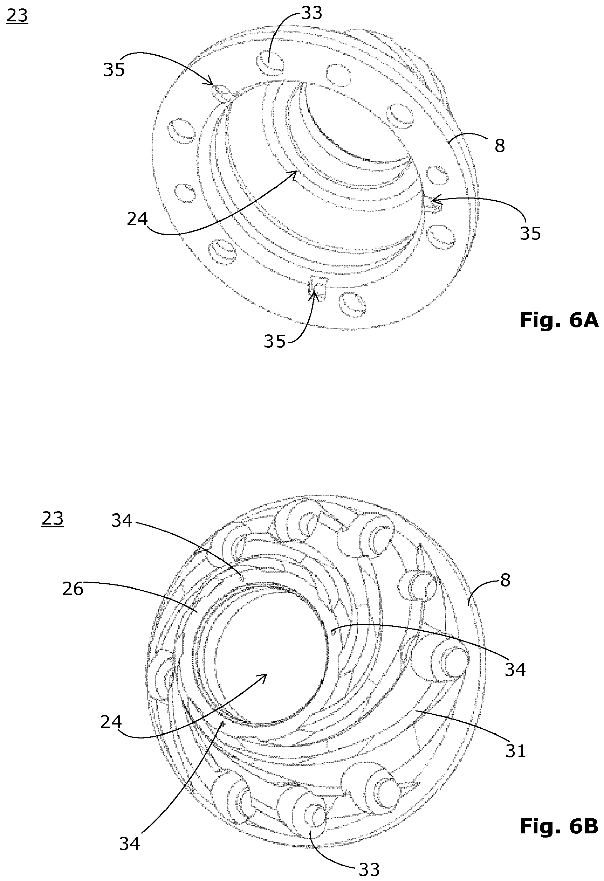

Weiterhin umfasst der Grundkörper, respektive der Adapter 23, eine zentrale Aufnahmeöffnung 24, die konzentrisch zu einer Werkstück-Spindelachse A der Bearbeitungsmaschine 10 angeordnet ist, und die dazu ausgelegt ist die Welle oder den Schaft 3 des Zahnradwerkstücks 1 aufzunehmen. Die Aufnahmeöffnung 24 kann bei allen Ausführungsformen einen oder mehrere Absätze oder Einschnürungen aufweisen, wie in Fig. 5 und in Fig. 6A zu erkennen ist.

Der Grundkörper kann bei allen Ausführungsformen eine sich konisch verjüngende Grundform haben, wie in Fig. 3 beispielhaft gezeigt.

Der Grundkörper kann bei allen Ausführungsformen eine rotationssymmetrische Form in Bezug zur Werkstück-Spindelachse A haben (wie z.B. die konische Grundform der Fig. 3). Dadurch, dass mindestens eine Nut 31 und/oder 32 im Bereich der Mantelfläche 29 vorgesehen ist, ergibt sich ein Adapter 23, dessen Achssymmetrie "gestört" ist.

Der Grundkörper kann bei allen Ausführungsformen eine sich konisch verjüngende Grundform mit einem zylindrischen Bereich 6 haben, wie in Fig. 3 und 4 beispielhaft gezeigt.

Der Grundkörper kann bei allen Ausführungsformen auch einen umlaufenden Absatz oder Kragen 8 aufweisen, wie in Fig. 5 sowie in den Figuren 6A, 6B beispielhaft gezeigt.

Fig. 4 zeigt eine schematisierte Seitenansicht einer weiteren Ausführungsform des Adapters 23 der Erfindung. In Fig. 4 ist zu erkennen, dass der Adapter 23 plan an der Ferse 4 des Zahnradwerkstücks 1 anliegt. D.h. im gespannten Zustand liegen ein Bereich der Ferse 4 und diese Plananlagefläche 26 plan aufeinander.

Fig. 5 zeigt eine schematisierte Schnittansicht einer weiteren Ausführungsform des Adapters 23 der Erfindung. In Fig. 5 liegt die Plananlagefläche 26 oben (im Bereich Eb1). Es handelt sich einen Darstellung eines Adapters 23, bei dem zwei Druckkanäle 30 in die Zeichenebene projiziert wurden.

Es sind die beiden druckdicht durch den Grundkörper verlaufende Druckkanäle 30 zu erkennen. Sie winden sich durch den Schichtaufbau des Grundkörpers von dem werkstückabgewandten Endbereich Eb2 bis zu dem werkstückseitigen Endbereich Eb1 und münden jeweils in der Plananlagefläche 26. In der Plananlagefläche 26 sind daher zwei kleine Austrittslöcher 34 vorgesehen. Auf der werkstückabgewandten Seite Eb2 sind zwei kleine Eingangslöcher 35 vorgesehen. Da die Nuten 31, 32 einen dreidimensional gekrümmten Verlauf haben, weisen in diesen Fällen auch der/die Druckkanäle 30 einen nicht-linearen, sich in drei Dimensionen ändernden Verlauf auf.

Eine entsprechende Plananlagekontrolle funktioniert beispielsweise wie folgt. Nachdem das Zahnradwerkstück 1 mit einer rückwärtigen Stirnfläche (z.B. mit seiner Ferse 4) auf der Plananlagefläche 26 des Adapters 23 aufliegt und sobald das Zahnradwerkstück 1 in der Spannvorrichtung 20 festgespannt wurde, werden die Druckkanäle 30 mit einem Gasdruck (z.B. mit Druckluft) beaufschlagt. Zu diesem Zweck wird das Gas durch die Eingangslöcher 35 in die Druckkanäle 30 gespeist. Wenn nun das Zahnradwerkstück 1 plan auf der Plananlagefläche 26 aufliegt, so kann durch die Austrittslöcher 34 kein Gas austreten. Somit bleibt der Gasdruck, der anfänglich angelegt wurde, bestehen. Falls sich das Zahnradwerkstück 1 lösen sollte, so kann das Gas durch eines oder beide der Austrittslöcher 34 entweichen und es kann ein Druckverlust festgestellt werden. In diesem Fall kann die Plananlagekontrolle z.B. eine Warnung absetzen und/oder sie kann das Nachspannen der Spannvorrichtung 20 auslösen.

Anhand der Fig. 4 und insbesondere der Figuren 6A, 6B lässt sich erkennen, dass die 3-dimensionale Form eines Adapters 23 sehr kompliziert sein kann. Einerseits gibt es mindestens eine Zentralbohrung 24, die zur Aufnahme der Welle oder des Schaftes 3 des Zahnradwerkstücks 1 ausgelegt ist. Andererseits umfasst der Adapter 23 der Erfindung mehrere gekrümmt verlaufende Nuten 31 und/oder 32 im Bereich der Mantelfläche 29, wobei diese Nuten 31, 32 dazu eingerichtet sind, um während einer Bearbeitung des Zahnradwerkstücks 1 in der Bearbeitungsmaschine 10 kollisionsfrei von einem Bearbeitungswerkzeug durchlaufen zu werden. In Fig. 4 ist eine Ausführungsform gezeigt, bei der erste Nuten 31 sich links herum gekrümmt und zweite Nuten 32 sich rechts herum gekrümmt um den Grundkörper des Adapters 23 erstrecken. Diese Nuten 31 und 32 scheiden oder durchdringen sich teilweise. Insgesamt ergibt sich eine stark zerklüftete Mantelfläche mit Einschnitten, die sich ins Material des Grundkörpers erstrecken. Im Körper des Adapters 23 bleibt daher nur wenig an Material stehen.

In den Figuren 6A, 6B ist eine Ausführungsform gezeigt, bei der sich Nuten 31 sich links herum gekrümmt um den Grundkörper des Adapters 23 erstrecken. Insgesamt ergibt sich auch hier eine stark zerklüftete Mantelfläche mit Einschnitten, die sich ins Material des Grundkörpers erstrecken.

Um nun einen oder mehrere druckdicht durch den Grundkörper verlaufende Druckkanäle 30 vorsehen zu können, müssen sich diese Druckkanäle 30 teilweise entlang eines komplizierten Pfades durch den Grundkörper winden. Dabei ist darauf zu achten, dass der Adapter 23 starken dynamischen Kräften (hauptsächlich Druckkräften parallel zur Werkstück-Spindelachse A und Verwindungskräften um diese Achse A herum) ausgesetzt ist. Daher ist bei der Auslegung des Adapters 23 darauf zu achten, dass die Druckkanäle 30 zu keiner statischen oder dynamischen Schwächung des Grundkörpers führen.

Mittels nummerischer Berechnungsansätze und/oder anhand von Versuchen kann der geeignete 2-dimensionale oder 3-dimensionale Verlauf der Druckkanäle 30 ermittelt werden. Im vorliegenden Dokument wird dies dadurch zusammengefasst, dass davon die Rede ist, dass sich die Druckkanäle 30 durch den Grundkörper "winden". Das Wort "winden" soll zum Ausdruck bringen, dass jeder Druckkanal 30 mindestens eine Richtungsänderung im Inneren des Materials des Adapters 23 vollzieht.

In Fig. 5 ist ein Ausführungsbeispiel gezeigt, bei dem sich beide Druckkanäle 30 innerhalb der Schnittebene durch den Adapter 23 winden. In diesem Fall haben diese Druckkanäle 30 einen 2-dimensional gewundenen Verlauf.

Die Druckkanäle 30 können bei allen Ausführungsformen aber auch einen 3-dimensional gewundenen Verlauf haben.

Um solche Adapter 23 mit ihrer komplizierten 3-dimensionalen Form überhaupt herstellen zu können, kommt hier statt eines materialabtragenden Verfahrens, wie z.B. Fräsen, ein additives oder aufbauendes Herstellverfahren zum Einsatz. Ein Beispiel ist das 3D-Drucken, das auch im industriellen Bereich Einzug gehalten hat.

Um solche Adapter 23 standfest und robust zu machen, wird vorgeschlagen sie beispielweise aus pulvermetallurgischem Hartmetall oder pulvermetallurgischem Hochleistungsstahl zu fertigen.

Das Herstellverfahren der Erfindung ist speziell auf die Herstellung form- und steifigkeitsoptimierter Adapter 23 ausgelegt.

Das Verfahren umfasst vorzugsweise bei allen Ausführungsformen die folgenden Schritte
- Bereitstellen eines Datensatzes, der den herzustellenden Adapter 23 charakterisiert. Dieser Datensatz beschreibt die Bauteilgeometrie des Adapters 23 und ist vorzugsweise bei allen Ausführungsformen funktionsoptimiert und/oder statisch-mechanisch optimiert und/oder geometrieoptimiert.
- Herstellen des Adapters 23 mittels eines additiven bzw. aufbauenden, form- und werkzeuglosen 3D-Fertigungsprozesses (z.B. eines 3D-Druckverfahrens, insbesondere mit einem selektiven 3D-Laserschmelzverfahren), wobei der Datensatz zum direkten oder indirekten Steuern des 3D-Fertigungsprozesses eingesetzt wird. Das Herstellen des Adapters 23 erfolgt entweder enkonturnah (d.h. es folgt nach dem Herstellen mindestens ein Nachbearbeitungsschritt), oder das Herstellen des Adapters 23 erfolgt mit der endgültigen Kontur (d.h. ohne einen Nachbearbeitungsschritt).
- Aufgrund der Tatsache, dass die Erfindung einen additiven bzw. aufbauenden, form- und werkzeuglosen 3D-Fertigungsprozess einsetzt, ergibt sich ein Adapter 23, der einen herstellungsbedingten Schichtaufbau aufweist. Falls ein selektives 3D-Laserschmelzverfahren zum Einsatz kommt, so ergibt sich ein stoffschlüssiger Zusammenhalt zwischen und innerhalb der einzelnen Schichten des Schichtaufbaus. D.h., der fertige Adapter 23 zeichnet sich beim Herstellen mittels 3D-Laserschmelzverfahren durch ein vollständig dichtes, metallisches Gefüge durch gute mechanisch-technologische Werkstoffeigenschaften aus.

Vor dem Bereitstellen des Datensatzes erfolgt beispielsweise das Auslegen des Adapters 23 in Bezug auf die Funktion und/oder die zu erwartende statisch-mechanische Belastung. Der form- und werkzeuglose 3D-Fertigungsprozess bietet hohe Freiheitsgrade bei der Auslegung des Adapters 23.

Der Datensatz beschreibt bei allen Ausführungsformen vorzugsweise die einzelnen Schichten des Schichtaufbaus des Adapters 23.

Im Rahmen dieser Auslegung sind Informationen über die Geometrie des zu bearbeitenden Zahnradwerkstücks 1 und über die Geometrie der Spannvorrichtung 20 erforderlich. Anhand dieser Geometrieinformation wird die 3-dimensionale Form des Grundkörpers des Adapters 23 festgelegt. So kann zum Beispiel der werkstückseitige Durchmesser D1 so festgelegt werden, dass eine ausreichend große, ringförmige Plananlagefläche 26 als Anschlag für die Ferse 4 eines Kegelradwerkstücks 1 zur Verfügung steht. Weiterhin kann der Durchmesser D2 auf der werkstückabgewandten Seite so festgelegt werden, dass sich eine sichere Verbindung mit der Spannvorrichtung 20 ergibt.

Im Rahmen dieser Auslegung kann der Adapter 23 aller Ausführungsformen auch geometrieoptimiert werden. Bei der Geometrieoptimierung geht es hier primär um eine Gewichts- und/oder Materialreduktion.

Weiterhin kann/können im Rahmen der Auslegung die 3-dimensionalen Flugbahnen des/der Bearbeitungswerkzeuge herangezogen werden. Anhand einer Einhüllenden dieser Flugbahnen kann ermittelt werden, ob ein Bereich eines Bearbeitungswerkzeugs mit dem Grundkörper des Adapters 23 kollidieren würde, wenn das Bearbeitungswerkzeug z.B. vom Kopf zur Ferse 3 des Kegelradwerkstücks 1 durch eine Zahnlücke bewegt wird und an der Fersenseite aus der Zahnlücke austritt. Anhand der zu erwartenden 3-dimensionalen Flugbahnen und/oder der Kollisionsberechnung können die Geometrie und der Verlauf der Nut oder Nuten 31, 32 am Grundkörper des Adapters 23 festgelegt werden.

Weiterhin kann/können dann im Rahmen der Auslegung der/die Druckkanäle 30 dimensioniert und dessen/deren gewundener Verlauf festgelegt werden.

Beim Festlegen der Nut oder Nuten 31, 32 und/oder beim Festlegen des gewundenen Verlaufs des/der Druckkanäle 30 können Festigkeitsberechnungen ausgeführt werden.

Da der Adapter 23 in einer Bearbeitungsmaschine 10 hohen Druck- und Torsionsbelastungen ausgesetzt ist, werden vorzugsweise bereits bei der Auslegung eine oder mehrere der folgenden Maßnahmen getroffen:
- Ausstatten des/der Druckkanäle 30 mit Stützstrukturen, um ein Quetschen des/der Druckkanäle 30 zu verhindern;
- Auslegen des Verlaufs des/der Nuten 31, 32 so, dass sich keine oder nur geringe Überhänge ergeben;
- Ausstatten des/der Nuten 31, 32 mit Stützstrukturen in Bereichen, die von dem Bearbeitungswerkzeug nicht erreichbar sind

Der Adapter 23 kann bei allen Ausführungsformen im werkstücknahen Bereich Eb1 partiell mit einem E-Modul so ausgelegt sein, dass der werkstücknahe Bereich des Adapters 23 schwingungsdämpfende Eigenschaften hat.

Der Adapter 23 kann bei allen Ausführungsformen im werkstücknahen Bereich Eb1 mit einer umlaufenden Nut ausgelegt sein, um dem Adapter 23 durch diese Nut schwingungsdämpfende, elastische Eigenschaften zu geben, die ein Lösen des Werkstücks und dadurch auftretende Torsionsschwingungen verhindern.

**Bezugszeichenliste:**

| | |
|---|---|
| Zahnradwerkstück / Kegelrad / Ritzel | 1 |
| Kopfbereich / Kegelbereich / Kegelmantel | 2 |
| Welle / Schaft | 3 |
| Ferse / Axialanlagenabsatz am Zahnradwerkstück | 4 |
| Einrichtung zum Verspannen des Zahnradwerkstücks | 5 |
| Bereich | 6 |
| Öffnung | 7 |
| Absatz / Kragen | 8 |
| Nasenstück | 9 |
| Bearbeitungsmaschine / Verzahnmaschine / (Zahnrad-) Maschine | 10 |
| Verkleidung | 11 |
| Sichtfenster | 12 |
| Spannvorrichtung | 20 |
| Spannstange | 21 |
| (Spannvorrichtungs-) Grundkörper | 22 |
| konischer Bereich / Aussenkonus | 22.1 |
| Flansch | 22.2 |
| Adapter / Nasenstück / Zentrierbüchse | 23 |
| Zentralbohrung / (zentrale) Aufnahmeöffnung des Adapters | 24 |
| Zentralbohrung / Aufnahmeöffnung | 25 |
| ringförmiger Anschlussflansch/ Auflagefläche / Plananlagefläche | 26 |
| Mantelfläche / (äussere) Zylinder- oder Kegelmantelfläche / Außenkegel des Adapters | 29 |
| (Druck-)Kanal | 30 |
| gekrümmt verlaufende Nut | 31 |
| gekrümmt verlaufende Nut | 32 |
| Durchgangsloch, Befestigungsloch | 33 |
| Austrittsloch | 34 |
| Eingangsloch | 35 |
| Werkstück-Spindelachse | A |
| Durchmesser | D1, D2 |
| (Plan-)Ebene / Anschlagebene des Zahnradwerkstücks | E |
| werkstückseitiger Endbereich / Anschlagsfläche Adapter | Eb1 |
| werkstückabgewandter Endbereich | Eb2 |
| Pfeil/Zugkraft | P |

## Patentansprüche

1. Adapter (23), der zur Verwendung als Teil einer Spannvorrichtung (20) einer Bearbeitungsmaschine (10) ausgelegt ist, wobei der Adapter (23) beim Einspannen eines Zahnradwerkstücks (1) in der Spannvorrichtung (20) mechanisch mit dem Zahnradwerkstück (1) in Kontakt steht, umfassend
- eine zentrale Aufnahmeöffnung (24), die konzentrisch zu einer Werkstück-Spindelachse (A) der Bearbeitungsmaschine (10) angeordnet ist, und die dazu ausgelegt ist eine Welle oder einen Schaft (3) des Zahnradwerkstücks (1) aufzunehmen,
- eine ringförmige Plananlagefläche (26), die
• konzentrisch zu derzentralen Aufnahmeöffnung (24) angeordnet ist,
• sich in einem werkstückseitigen Endbereich (Eb1) des Adapters (23) befindet, und
• die im Wesentlichen senkrecht zur Werkstück-Spindelachse (A) verläuft,
wobei der Adapter (23) einen Grundkörper umfasst, der
- eine sich verjüngende Grundform aufweist, wobei der Grundkörper im werkstückseitigen Endbereich (Eb1) einen geringeren Umfang als in einem werkstückabgewandten Endbereich (Eb2) hat,
- einstückig ist,
- einen Schichtaufbau,
- mehrere gekrümmt verlaufende Nuten (31, 32) aufweist, wobei die Nuten (31, 32) dazu eingerichtet sind während einer Bearbeitung des Zahnradwerkstücks (1) in der Bearbeitungsmaschine (10) kollisionsfrei von einem Bearbeitungswerkzeug durchlaufen zu werden, und
- mindestens einen druckdicht durch den Grundkörper verlaufenden Druckkanal (30) umfasst, der sich durch den Schichtaufbau von dem werkstückabgewandten Endbereich (Eb2) bis zu dem werkstückseitigen Endbereich (Eb1) windet und der in der Plananlagefläche (26) mündet.

2. Adapter (23) gemäß Anspruch 1, **dadurch gekennzeichnet, dass** in dem Grundkörper mehrere Durchgangslöcher (33) vorhanden sind, die sich parallel zu der Werkstück-Spindelachse (A) erstrecken und die der Befestigung des Adapters (23) an einem Teil der Spannvorrichtung (20) dienen.

3. Adapter (23) gemäß Anspruch 1 oder 2, **dadurch gekennzeichnet, dass** der Druckkanal (30) sich so durch den Schichtaufbau windet, dass er mindestens eine Richtungsänderungen aufweist.

4. Adapter (23) gemäß einem der Ansprüche 1 bis 3, **dadurch gekennzeichnet, dass** der Druckkanal (30) sich 3-dimensional durch den Schichtaufbau windet.

5. Adapter (23) gemäß einem der Ansprüche 1 bis 4, **dadurch gekennzeichnet, dass** der Schichtaufbau in einem additiven Verfahren durch selektives Laserschmelzen eines Metallwerkstoffs hergestellt wurde.

6. Adapter (23) gemäß einem der Ansprüche 1 bis 4, **dadurch gekennzeichnet, dass** der Schichtaufbau in einem form- und werkzeuglosen 3D-Fertigungsprozess unter Einsatz eines Metallwerkstoffs hergestellt wurde.

7. Adapter (23) gemäß einem der Ansprüche 1 bis 4, **dadurch gekennzeichnet, dass** der Schichtaufbau mit einem 3D-Laserschmelzverfahren unter Einsatz eines Metallwerkstoffs so hergestellt wurde, dass sich ein stoffschlüssiger Zusammenhalt zwischen und innerhalb einzelner Schichten des Schichtaufbaus ergibt.

8. Adapter (23) gemäß einem der Ansprüche 5 bis 7, **dadurch gekennzeichnet, dass** der Schichtaufbau nach dem Laserschmelzen nitridiert wurde und eine äußere Nitridschicht umfasst, deren Dicke vorzugsweise weniger als 100 µm beträgt.

9. Adapter (23) gemäß einem der Ansprüche 5 bis 7, **dadurch gekennzeichnet, dass** der Schichtaufbau geschliffen wurde und eine Oberflächenrauheit von weniger als 50 µm aufweist.

10. Spannvorrichtung (20) mit einem Adapter (23) gemäß einem der Ansprüche 1 - 9.

11. Verfahren zum Bereitstellen eines Adapters (23) gemäß Anspruch 1, **gekennzeichnet durch** die folgenden Schritte:
- Bereitstellen eines Datensatzes, der die Bauteilgeometrie des Adapters (23) definiert,
- Herstellen des Adapters (23) mittels eines additiven, form- und werkzeuglosen 3D-Fertigungsprozesses, wobei der Datensatz zum Steuern des 3D-Fertigungsprozesses eingesetzt wird.

12. Verfahren gemäß Anspruch 11, **dadurch gekennzeichnet, dass** vor dem Bereitstellen eines Datensatzes eine rechnergestützte Auslegung des Adapters (23) vorgenommen wird, wobei im Rahmen dieser Auslegung eine Funktionsoptimierung und/oder eine statisch-mechanische Optimierung und/oder eine Geometrieoptimierung durchgeführt wird.

13. Verfahren gemäß Anspruch 11, **dadurch gekennzeichnet, dass** vor dem Bereitstellen eines Datensatzes eine rechnergestützte Auslegung des Adapters (23) vorgenommen wird, wobei im Rahmen dieser Auslegung eine 2-dimensional oder 3-dimensional gewundener Verlauf des Druckkanals (30) festgelegt wird.

14. Verfahren gemäß einem der Ansprüche 11 - 13, **dadurch gekennzeichnet, dass** der Schichtaufbau
- in einem additiven Verfahren durch selektives Laserschmelzen eines Metallwerkstoffs, oder
- in einem form- und werkzeuglosen 3D-Fertigungsprozess unter Einsatz eines Metallwerkstoffs, oder
- mit einem 3D-Laserschmelzverfahren unter Einsatz eines Metallwerkstoffs so hergestellt wird, dass sich ein stoffschlüssiger Zusammenhalt zwischen und innerhalb einzelner Schichten des Schichtaufbaus ergibt.
